# FASCICULE DE BREVET EUROPEEN

(11) **EP 0 656 239 B1**
(45) Date de publication et mention de la délivrance du brevet: **12.01.2000**
(21) Numéro de dépôt: 94402734.1
(22) Date de dépôt: 30.11.1994
(51) Int. Cl.: B23B 25/02

(54) **Procédé d'usinage de pièces en titane ou alliage de titane et bride d'arrosage pour un tel usinage**
Verfahren zum Bearbeiten von Werkstücken aus Titan oder Titanlegierungen sowie Sprühklemme dazu
Process for machining workpieces of titanium or titanium alloy and spray clamp therefor

(30) Priorité: 01.12.1993 FR 9314364
(43) Date de publication de la demande: 07.06.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Lagrolet, Serge Pierre Jean, F-92260 Fontenay Aux Roses (FR); Leboulanger, Jean-Pierre, F-77590 Chartrettes (FR); Vallet, Serge André Marcel, F-91220 Bretigny sur Orge (FR)

(56) Documents cités:
- EP-A- 0 211 652
- FR-A- 1 593 553
- US-A- 4 791 840
- US-A- 5 148 728

## Description

### Domaine de l'invention

L'invention concerne l'usinage de pièces en titane ou alliages de titane devant avoir en particulier un état de surface de haute qualité.

### Art antérieur et problème posé

Les aéronefs et leurs équipements doivent être les plus légers possibles pour faciliter leur maniabilité en vol. C'est pourquoi, le titane, qui est un métal dur, résistant, et deux fois moins lourd que les aciers, est utilisé en grande quantité dans la composition des pièces constituant de nombreux appareils équipant les aéronefs : c'est bien entendu le cas des turboréacteurs.

De plus, la masse embarquée par un aéronef devant être minimale, les différentes pièces constitutives ne doivent comporter que des formes fonctionnelles et utiles. Il s'ensuit que de nombreuses pièces affectent des formes précises et parfois très complexes nécessitant de nombreux usinages longs et compliqués. Par exemple, une pièce brute de fonderie peut perdre jusqu'à 90 % de sa matière sous la forme de copeaux. En conséquence, les temps d'usinage sont très importants.

Le but principal de l'invention est donc d'usiner des pièces en titane et en alliages de titane beaucoup plus rapidement qu'on ne le pratique à ce jour. Par exemple, pour usiner l'alliages de titane TA6V, il est connu d'utiliser des vitesses de coupe allant jusqu'à 60 m/min.

Le but principal de l'invention est donc d'augmenter cette vitesse de coupe pour l'usinage de pièces en titane et alliages de titane, tout en gardant une qualité d'état de surface satisfaisante.

De nombreux progrès dans la composition des matériaux de coupe pour l'usinage des aciers ainsi que les alliages réfractaires utilisés en aéronautique (céramique et céramique composite) ont permis de multiplier les vitesses de coupe par un facteur 10. Par contre, pour les alliages de titane, aucun progrès n'a été effectué au niveau de la composition des matériaux de coupe.

Par EP-A-0 211 652, on connait par ailleurs un procédé d'usinage de pièces en titane et alliages de titane au moyen de plaquettes en carbure de tungstène comportant
- la fixation d'une bride d'arrosage sur un porte-outil, la bride étant munie de deux canalisations communicantes, la canalisation finale débouchant selon un axe orienté juste sur de l'arête de coupe, de la plaquette, les moyens de fixation assurant un appui étanche entre les faces de la bride et du porte-outil le diamètre de la première canalisation étant supérieur au diamètre final de la canalisation finale ledit diamètre de la première canalisation étant constant, et la canalisation finale constituant un cône de réduction de conicité inférieure à 45 degrés,
- l'alimentation desdites canalisations en fluide de lubrification sous haute pression, entre 60 et 400 bars de manière à diriger au moins un jet de fluide juste au-dessus de l'arête de coupe de la plaquette, la distance existant entre l'extrémité de la canalisation finale et l'arête de coupe étant comprise entre 4 et 12 mm et l'angle d'inclinaison de l'axes du jet avec le plan de la face de coupe de la plaquette d'usinage est compris entre 0 et 30 degrés,

### Résumé de l'invention

Le premier objet principal de l'invention est un procédé d'usinage de pièces en titane ou alliages de titane au moyen de plaquettes en carbure de tungstène, utilisant les aménagements selon la revendication 1.

Selon l'invention, on utilise au moins un jet de fluide de lubrification sous haute pression, c'est-à-dire 60 à 400 bars, dont l'axe est dirigé sur de l'arête de coupe de la plaquette d'usinage.

Pour faciliter cette mise en oeuvre, la distance D séparant l'extrémité de la canalisation du jet avec l'arête de coupe de la plaquette d'usinage, doit être comprise entre 4 et 12 mm (4 mm ≤ D ≤ 12 mm).

Dans le cas d'une canalisation rectiligne du jet de fluide, une réduction de diamètre ne peut être utilisée que par un cône de réduction dont la conicité C par rapport à l'axe de la canalisation ne dépasse pas 45° (C ≤ 45°).

Toujours dans le cas d'une canalisation rectiligne du jet de fluide, cette réduction de diamètre ne peut être utilisée que sur une longueur L compris entre 6 d et 10 d, (6d ≤ L ≤ d) d étant le diamètre de la canalisation réduite du jet.

Dans le cas d'une canalisation du jet de fluide avec un changement de direction, l'angle A de changement de direction ne doit pas dépasser 30° (A ≤ 30°).

Dans le cas d'une réduction de diamètre de la canalisation du jet de fluide, le tronçon amont qui est le plus large doit se terminer par un cône dont la conicité F ne doit pas excéder 120° (F ≤ 120°).

Un angle d'inclinaison I doit être prévu entre l'axe du jet et la face de coupe. Cet angle I ne doit pas dépasser 30° (I ≤ 30°).

Dans le cas de l'utilisation d'une plaquette d'usinage possédant une grande arête de coupe, plusieurs jets de fluide peuvent être utilisés pour lubrifier cette arête.

Un deuxième objet principal de l'invention est une bride d'arrosage de porte-outil pour l'usinage de pièce en titane et alliages de titane.

Selon l'invention, elle comprend :
- des moyens de fixation de la bride sur le porte-outil ;
- au moins une canalisation de distribution de jets sous pression, dont une portion finale débouche selon un axe orienté vers l'arête de coupe de l'outil.

Dans le cas d'une arête de coupe rectiligne, plusieurs canalisations de jets de fluides peuvent être prévus, dont une centrale perpendiculaire à l'arête de coupe et deux latérales légèrement décalées de part et d'autre de la canalisation centrale.

Cette même distribution de canalisation peut être utilisée dans le cas d'une arête de coupe en arc de cercle.

### Liste des figures

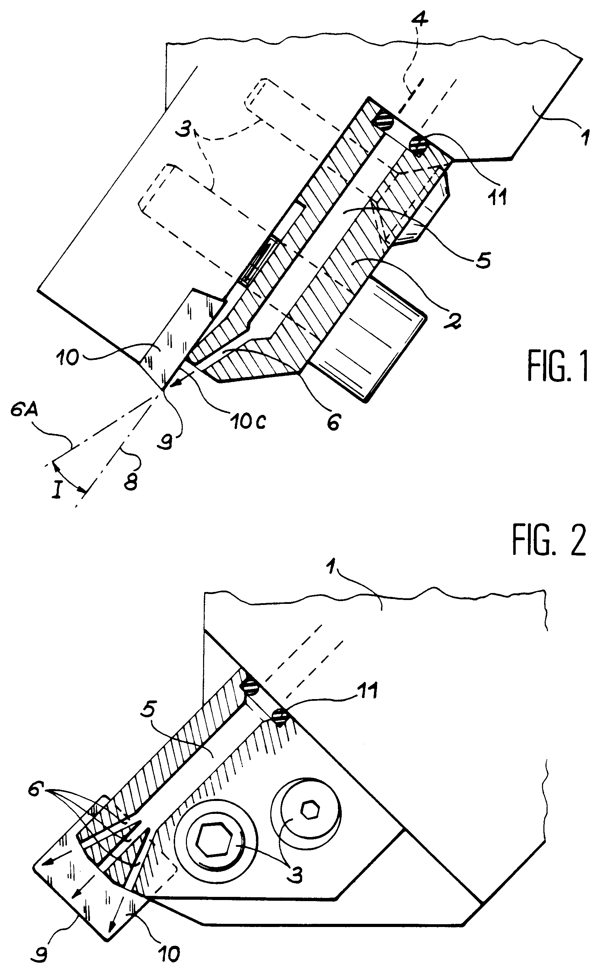

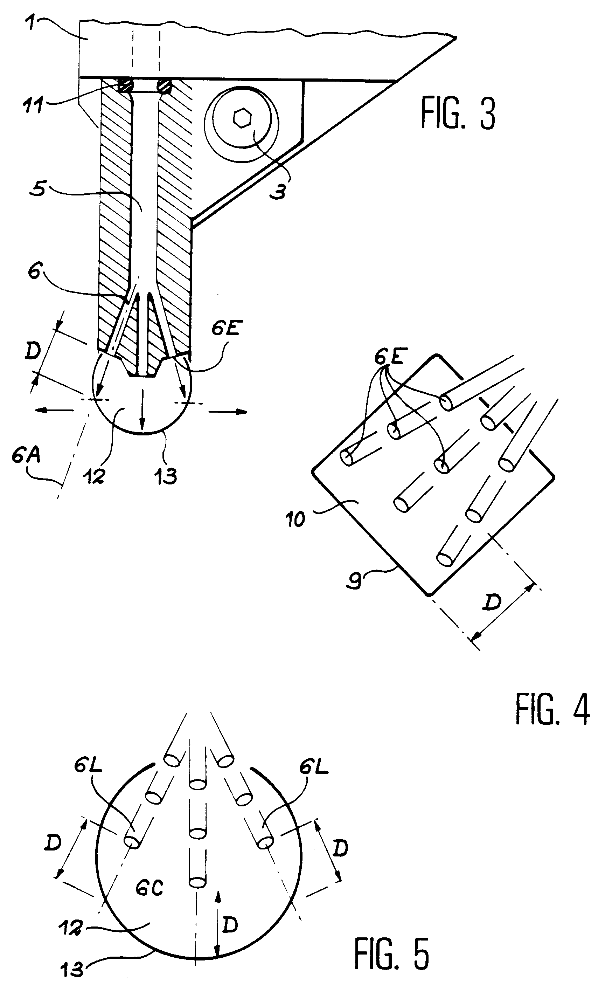

Plusieurs réalisations de l'invention et des modes de réalisation qui ne sont pas converts par les revendications (voir figures 2 et 3), mais qui sont présentés pour permettre une meilleure compréhension de l'invention seront évoquées ainsi que ses caractéristiques techniques dans la description suivante, accompagnée de quelques figures représentant respectivement :
- figure 1, en coupe, une bride selon l'invention ;
- figure 2, en coupe, vue de dessus, la même bride que celle de la figure 1, dans le cas de l'utilisation d'une plaquette à arête de coupe rectiligne ;
- figure 3, en coupe et vue de dessus, la même bride de la figure 1 utilisée avec une plaquette dont l'arête de coupe est circulaire ;
- figure 4, un schéma relatif au positionnement des jets de fluides dans le cas d'une plaquette d'usinage à arête rectiligne ;
- figure 5, un schéma relatif à la distance de positionnement des jets de fluide dans le cas de l'utilisation d'une plaquette d'usinage à arête de coupe circulaire ;
- figure 6, un schéma explicatif du positionnement d'une canalisation de jets de fluide par rapport à la plaquette d'usinage ;
- figure 7, un schéma explicatif de la forme d'une canalisation de jets de fluides avec réduction de diamètre ;
- figure 8, un schéma explicatif d'une canalisation de jets de fluides avec changement de direction.

### Description détaillée de plusieurs réalisations de l'invention

La figure 1 représente en coupe un porte-outil 1 sur lequel est fixée une bride 2 destinée à la lubrification par arrosage d'une plaquette d'usinage 10, par exemple en carbure de tungstène, fixée sur le porte-outil 1. La bride est fixée par deux vis de fixation 3. Elle comporte une canalisation interne 5 positionnée en regard d'une canalisation 4 du porte-outil 1. Un joint d'étanchéité 11 peut compléter le montage au niveau de la jonction des deux pièces.

La canalisation interne 5 se prolonge par une canalisation 6 du jet de fluide. Celle-ci est orientée vers l'arête de coupe 9 de la plaquette d'usinage 10. En d'autres termes, l'axe 6A de la canalisation 6 est dirigé vers cette arête de coupe 9. On a fait figurer l'angle de I déterminant le positionnement de la canalisation 6 et de son axe 6A par rapport à l'orientation du plan de la face de coupe symbolisée par un axe 8. On note que, de préférence, cet angle d'orientation I est compris entre 0 et 30°.

On comprend ainsi qu'il est possible d'amener un fluide de lubrification sous hautes pressions dans le canal interne 5 de la bride 2 et de pouvoir projeter un jet de lubrifiant au moyen de la canalisation 6 sur l'arête de coupe 9 de la plaquette d'usinage 10. Des pressions de fluides de lubrication comprises entre 80 et au moins 400 bars (80.10⁵ et 400.10⁵ Pascals) peuvent être employés pour utiliser des pièce en titane ou en alliages de titane.

L'action du lubrifiant sous hautes pressions sur le copeau a pour effet : de soulever en fractionnement ce dernier, ce qui permet au lubrifiant de parvenir au plus près de l'interface outil/matière. On obtient ainsi un refroidissement permanent de l'arête de coupe alors qu'auparavant, la concentration de la chaleur sur l'arête était de l'ordre de 80%. L'excédant de puissance dû à la haute pression permet de fractionner le copeau.

Il est ainsi possible d'usiner des pièces en titane ou alliages de titane avec une vitesse de coupe avoisinant 150 m/min. L'état de surface obtenu est de même qualité que celui obtenu dans des conditions d'usinage usuelles de ce matériau. On obtient des pièces avec une précision avoisinant les cinq micromètres.

Bien entendu, dans ces conditions de pression du fluide lubrifiant, un aménagement de la machine-outil utilisée est nécessaire. Il concerne la protection des parties électriques, mécaniques, cinématiques, l'environnement étanchéité, l'aspiration et la protection humaine. En particulier, un capot étanche doit recouvrir le volume auparavant accessible à l'opérateur. En effet, des pressions de l'ordre de 400 bars (400.10⁵ Pascals) provoquent, pendant les usinages, des projections permanentes de fluide de lubrification et de copeaux. Toutes les surfaces délimitant le volume interne d'usinage, c'est-à-dire le porte-outil, la pièce, l'outil des parois internes de la machine-outil et du capot sont soumis à des projections incessantes.

Sur cette figure 1, on peut constater que la bride d'arrosage 2 peut non seulement avoir une fonction hydraulique, mais également collaborer à la fixation de la plaquette d'usinage 10 sur le porte-outil 1.

La figure 2 montre une réalisation d'un montage tel qu'il est représenté à la figure 1. Dans ce cas, la plaquette d'usinage 10 est une plaquette en carbure de tungstène avec une arête de coupe 9 rectiligne et peut être opérationnelle sur toute la largeur de coupe. On voit qu'il est ainsi possible de diviser la canalisation 6 en trois parties, dans le but de répartir le fluide de lubrification sur toutes les parties actives de l'arête de coupe 9.

En référence à la figure 3, le montage est du même type que celui de la figure 2. La plaquette d'usinage 12 a une arête de coupe 13 circulaire, dans le but d'usiner des gorges annulaires ou d'effectuer des chariotages par tournage. Les trois canalisations 6 sont positionnées également angulairement de manière analogue au positionnement des canalisations 6 de la figure 2. On peut toutefois noter que leur extrémité 6E est positionnée à une distance D relativement constante du point de l'arête de coupe 13 qui se trouve dans le prolongement de leur axe respectif. De cette manière, le fluide de lubrication atteint l'arête de coupe dans les mêmes conditions à chaque point.

La figure 4 représente schématiquement les différentes possibilités de variations de cette distance D séparant l'arête de coupe 9 avec les extrémités 6E des canalisations 6. Il s'avère efficace de positionner ces extrémités 6E a une distance D comprise entre 4 et 12 mm de l'arête de coupe 9, 4 mm ≤ D ≤ 12 mm. Ceci est choisi en fonction également de l'angle d'inclinaison I de l'axe 6A de ces canalisations 6 par rapport au plan de coupe référencé 8 sur la figure 1.

La figure 5 représente un schéma équivalent appliqué à une plaquette d'usinage 12 dont l'arête de coupe 13 est circulaire. Comme illustré sur la figure 3, les extrémités 6E des canalisations 6 se trouvent à une distance D identique dans chaque cas. On remarque que la canalisation centrale 6C est plus avancée que les canalisations latérales 6L, puisque le point de l'arête de coupe 13 qu'elle atteint est plus éloigné que les points atteints par les jets de fluides issus des canalisations latérales 6L.

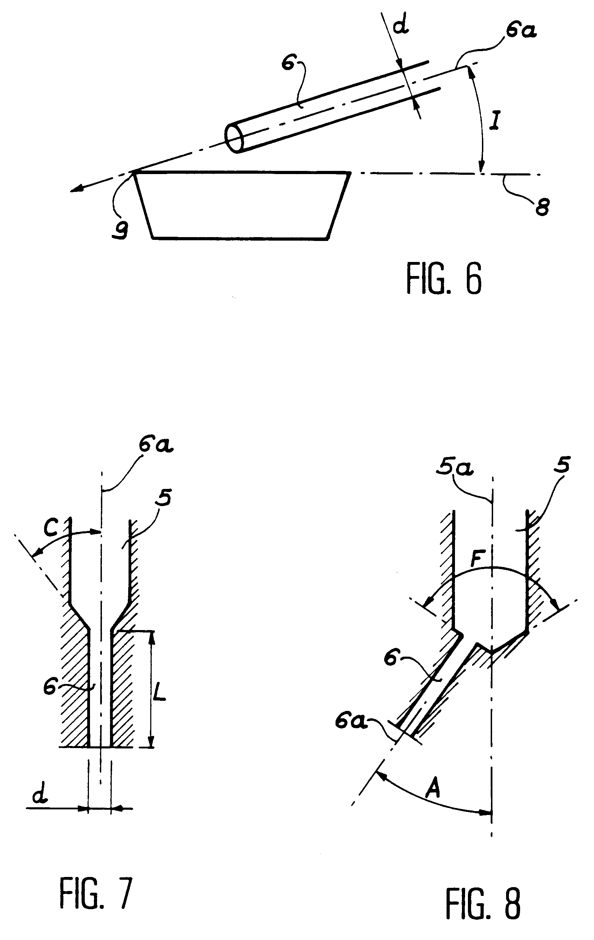

La figure 6 met en valeur non seulement l'angle d'inclinaison I défini avec la figure 1 de l'axe 6A avec le plan de coupe 8, mais également sa direction. Celle-ci est orientée juste sur l'arête de coupe 9.

La figure 7 illustre le fait qu'il est possible d'obtenir une très forte pression à la sortie de la canalisation 6 en utilisant, à l'intérieur de la bride, une réduction de diamètre entre la canalisation interne 5 et la canalisation 6. Toutefois, dans le but de ne pas provoquer des perturbations dans l'écoulement du fluide de lubrification, il s'avère particulièrement efficace d'utiliser une réduction de diamètre conique dont l'angle de conicité C ne dépasse pas 45° avec l'axe 6A de la canalisation 6 ; 0° ≤ C ≤ 45°.

De plus, la partie terminale de la canalisation 6 projetant le jet de fluide de lubrification ne doit pas être trop longue, ce qui entraînerait une perte de pression, ni trop courte, ce qui pourrait produire un jet non homogène. De préférence, la longueur L de la canalisation 6 doit être comprise entre 6.d et 10.d ; 6d ≤ L ≤ 10.d.

La figure 8 schématise un changement de direction entre la canalisation interne 5 et la canalisation 6. Dans le but de ne pas provoquer trop de perturbations dans le fluide de lubrification, il est préférable que l'angle A entre l'axe 6A de la canalisation 6 et l'axe 5A de la canalisation interne 5 ne dépasse pas 30°, 0° ≤ A ≤ 30°. De même, si une réduction de diamètre est à obtenir à ce niveau, le trou formant la canalisation interne 5 ne devra pas se terminer de manière brutale. Une terminaison conique d'un angle de 120° maximum est préférable dans ce cas, 0° ≤ F ≤ 120°.

Compte tenu des très hautes pressions 80 à 400 bars (80.10⁵ à 400.10⁵ Pascals) utilisées pour ce type d'usinage de pièces en titane ou alliages de titane, des aménagements spéciaux sur la machine-outil sont à prévoir. Par exemple, il est nécessaire de prévoir des systèmes d'aspiration des brouillards résultants du mélange de copeaux et de gouttelettes de fluide de lubrication.

Ce dernier doit être filtré à un degré qui est de préférence inférieur à 50 µm. On obtient une telle filtration au moyen d'une feuille de papier tel que celui utilisé pour le bac d'une rectifieuse à huile soluble.

La pompe haute pression utilisée pour la mise en oeuvre d'un tel procédé doit pouvoir faire parvenir des jets de fluides de lubrication d'une puissance totale de l'ordre de 10 kW sous une pression de 300 bars. Une telle pompe est entraînée par un moteur triphasé de 15 kW.

Comme l'illustrent les deux dernières figures, il est nécessaire de respecter des règles de la mécanique hydraulique pour limiter les pertes de charge dans la bride d'arrosage, c'est-à-dire dans les canalisations internes 5 et les canalisations 6. Il est donc en conséquence nécessaire d'utiliser des courbes régulières pour ces canalisations sans procéder à des changements de direction trop brusques ou des changements de sections trop brusques. De plus, il est nécessaire d'éviter des chambres mortes de recirculation.

Dans de telles conditions d'usinage et de lubrification, il est possible d'atteindre des vitesses de coupe de 150 à 180 m/min, ce qui constitue un gain de 2,5 sur le temps de coupe. Sur le temps global de production, on peut compter sur une amélioration de 30 à 40 %.

Compte tenu du fait que les copeaux sont sectionnés, leur évacuation en est améliorée. En effet, on obtient un bon fractionnement des copeaux, évitant les arrêts de machine nécessaires pour enlever les copeaux qui étaient longs et filants auparavant.

Concernant les états de surface obtenus, on peut obtenir un grand RA avoisinant 0,4.

En finition, il est préférable de ne pas dépasser la valeur de 100 bars pour la pression utilisée. En effet, au-delà, les copeaux risquent d'être rejetés contre les faces de la pièce avec une force suffisante pour éventuellement endommager celle-ci par des piqures.

## Revendications

1. Procédé d'usinage de pièces en titane et alliages de titane au moyen de plaquettes en carbure de tungstène comportant
- la fixation d'une bride d'arrosage (2) sur un porte-outil (1), la bride (2) étant munie de deux canalisations (5, 6) communicantes, la canalisation finale (6) débouchant selon un axe (6A) orienté juste sur l'arête de coupe (9, 13) de la plaquette (10, 12), les moyens de fixation (3) assurant un appui étanche entre les faces de la bride (2) et du porte-outil (1), le diamètre de la première canalisation (5) étant supérieur au diamètre de la canalisation finale (6), lesdits diamètres étant respectivement constants et reliés par un cône de réduction de conicité inférieure à 45 degrés, la longueur L de la canalisation finale (6) étant comprise entre 6d et 10d, d étant son diamètre,
- l'alimentation desdites canalisations (5, 6) en fluide de lubrification sous haute pression, entre 60 et 400 bars de manière à diriger au moins un jet de fluide juste au-dessus de l'arête de coupe (9, 13) de la plaquette (10, 12), la distance (D) existant entre l'extrémité (6E) de la canalisation finale (6) et l'arête de coupe (9, 13) étant comprise entre 4 et 12 mm et l'angle d'inclinaison (I) de l'axe (6A) du jet avec le plan de la face de coupe (8) de la plaquette d'usinage (10, 12) est compris entre 0 et 30 degrés,
- l'usinage de la pièce en utilisant une vitesse de coupe supérieure à 150 m par minute.

## Claims

1. Method of machining components made of titanium and titanium alloys by means of tungsten-carbide tips, including
- the fixing of a spraying flange (2) onto a tool holder (1), the flange (2) being equipped with two communicating ducts (5, 6), the final duct (6) opening out along an axis (6A) oriented exactly onto the cutting edge (9, 13) of the tip (10, 12), the fixing means (3) providing a leaktight support between the faces of the flange (2) and of the tool holder (1), the diameter of the first duct (5) being larger than the diameter of the final duct (6), the said diameters being respectively constant and linked by a reduction cone with conicity of less than 45 degrees, the length L of the final duct (6) lying between 6d and 10d, d being its diameter,
- the supply of lubrication fluid at high pressure, between 60 and 400 bar, to the said ducts (5, 6) in such a way as to direct at least one jet of fluid exactly above the cutting edge (9, 13) of the tip (10, 12), the distance (D) existing between the end (6E) of the final duct (6) and the cutting edge (9, 13) lying between 4 and 12 mm, and the angle of inclination (I) of the axis (6A) of the jet with the plane of the cutting face (8) of the machining tip (10, 12) lies between 0 and 30 degrees,
- the machining of the component, using a cutting speed higher than 150 m per minute.

## Patentansprüche

1. Verfahren zum Bearbeiten von Werkstücken aus Titan und Titanlegierungen mittels Schneidplatten aus Wolframkarbid, bestehend aus
- dem Befestigen einer Sprühklemme (2) an einem Werkzeughalter (1), wobei die Klemme (2) mit zwei miteinander verbundenen Kanälen (5, 6) versehen ist, wobei der Endkanal (6) entlang einer Achse (6A) mündet, die gerade auf die Schneidkante (9, 13) der Schneidplatte (10, 12) ausgerichtet ist, wobei die Befestigungsmittel (3) eine dichte Anlage zwischen den Flächen der Klemme (2) und dem Werkzeughalter (1) gewährleisten, wobei der Durchmesser des ersten Kanals (5) größer ist als der Durchmesser des Endkanals (6), wobei diese Durchmesser jeweils gleichbleibend sind und durch einen Reduktionskonus mit einer Kegelneigung von weniger als 45 Grad miteinander verbunden sind, wobei die Länge L des Endkanals (6) zwischen 6d und 10d liegt, wobei d sein Durchmesser ist,
- dem Speisen dieser Kanäle (5, 6) mit Schmierfluid, das unter hohem Druck zwischen 60 und 400 Bar steht, so daß mindestens ein Fluidstrahl genau über die Schneidkante (9, 13) der Schneidplatte (10, 12) gerichtet ist, wobei die Distanz (D) zwischen dem Ende (6E) des Endkanals (6) und der Schneidkante (9, 13) zwischen 4 und 12 mm beträgt und der Neigungswinkel (I) der Achse (6A) des Strahls zu der Ebene der Schnittseite (8) der Schneidplatte (10, 12) zwischen 0° und 30° liegt,
- der Bearbeitung des Werkstücks bei einer Schneidgeschwindigkeit von mehr als 150 m pro Minute.
